# EUROPEAN PATENT APPLICATION

(11) **EP 1 772 823 A1**
(43) Date of publication of application: **11.04.2007**
(21) Application number: 06767635.3
(22) Date of filing: 29.06.2006
(51) Int. Cl.: G06T 1/00, G06F 17/30, G06T 7/00

(54) **SEARCH SYSTEM AND SEARCH METHOD**

(30) Priority: 30.06.2005 JP 2005192810
(71) Applicant: Olympus Corporation, Tokyo 151-0072 (JP)
(72) Inventor: ONO, Kazuo Int.Pro.Sup.Dep, Hachioji-shi Tokyo 192-8512 (JP); SHIBASAKI, Takao Int.Pro.Sup.Dep, Hachioji-shi Tokyo 192-8512 (JP); FURUHASHI, Yukihito Int.Pro.Sup.Dep, Hachioji-shi Tokyo 192-8512 (JP)
(74) Representative: von Hellfeld, Axel
(86) International application number: PCT/JP2006/013018
(87) International publication number: WO 2007/004522

(57) **Abstract**

Based on an image input by an image input section (11), a mobile application (13) and a matching process section (21) use templates managed in a hierarchical manner to search a TP data management DB (22) for an image. At this time, the mobile application (13) and matching process section (21) perform template matching using a higher level hierarchical template (e.g., 1st-level hierarchical template 2221) and subsequent template matching using a lower level hierarchical template (e.g., 2nd-level hierarchical template 2222) to narrow down the number of images to be searched for and display images as narrowed down search results.

## Description

### Technical Field

The present invention relates to a search system and a search method for searching a database for an image.

### Background Art

As a method for searching a database for an image corresponding to an input image, there is widely known a template matching. This method previously creates template images each having a lower resolution than that of the original image, registers the template images in the database, and makes matching between input image having the same resolution level and the template images.

However, in such template matching, there is a possibility that matching error between two similar images occurs. To avoid the matching error, a degree-of-similarity table is used to manage the similarity between the images to thereby prevent registration of similar images. However, the more the number of registered templates, the more likely becomes the possibility of the matching error.

Further, there is known a method concerning determination of the similarity. This method determines the feature value determining the similarity based on the arrangement of feature points. In such a method, as disclosed in, e.g., Jpn. Pat. Appln. KOKAI No. 2004-362186, in the case where a large number of matching database are prepared and referred to, a technique in which matching is performed with matching servers connected in parallel and large number of the reference data divided into a plurality of blocks in order to reduce search time is adopted.

### Disclosure of Invention

However, the present invertors have confirmed by experiments that the parallel matching process as disclosed in Jpn. Pat. Appln. KOKAI No. 2004-362186 is effective in increasing the speed of the search time but not effective in increasing the recognition (success) rate.

The present invention has been made in view of the above points, and an object thereof is to provide a search system and a search method capable of achieving, in a balanced manner, an increase in both the speed of search time and recognition rate.

According to an aspect of a search system of the invention, there is provided a search system characterized by comprising:
image input means for inputting an image;
search means for searching a database for an image using templates, which are managed in a hierarchical manner, based on the image input by the image input means, the search means narrowing down the number of images to be searched for by performing template matching using a higher level hierarchical template and subsequent template matching using a lower level hierarchical template; and
output means for outputting images as search results narrowed down by the search means.

According to an aspect of a search method of the invention, there is provided a method for searching a database for an image, characterized by comprising the steps of:
inputting an image;
performing, based on the input image, template matching using a higher level hierarchical template of templates managed in a hierarchical manner to search a database for an image and further performing template matching using a lower level hierarchical template to narrow down the number of images to be searched for; and
outputting images as search results narrowed down by the search means.

### Brief Description of Drawings

FIG. 1 is a view showing a configuration of a search system according to an embodiment of the present invention;
FIG. 2 is a view showing a paper space and a target image on the paper space;
FIG. 3 is a flowchart of hierarchical template creation process performed in a TP creation section;
FIG. 4 is a view showing an example of area-dividing layout;
FIG. 5 is a view showing another example of the area-dividing layout;
FIG. 6 is a view showing an example of the area-dividing layout which is a combination of cut-out position and resolution;
FIG. 7 is a view showing another example of the area-dividing layout which is a combination of cut-out position and resolution;
FIG. 8 is a view for explaining a problem in conventional template matching;
FIG. 9 is a view for explaining an advantage of use of a hierarchical template;
FIG. 10 is a flowchart of TP data management process performed in the TP data management DB;
FIG. 11 is a flowchart showing operation of a mobile application performed in the terminal side;
FIG. 12 is a flowchart showing matching process performed in the matching process section;
FIG. 13 is a view for explaining a first concrete example, which shows similar target images, layout, 1st level hierarchical template, and 2nd level hierarchical template;
FIG. 14 is a view showing a configuration of a search system in a second concrete example;
FIG. 15 is a view for explaining resolution of an input image of a target image, mobile terminal with camera, and TP data management DB in a third concrete example;
FIG. 16 is a view showing a configuration of a search system in a fourth concrete example;
FIG. 17 is a view showing a fixed positional relationship between an individual area and ID area in a target image to be recognized;
FIG. 18 is views each showing a relative positional relationship between the individual area and ID area in the target image to be recognized;
FIG. 19 is a view for explaining a display example in the case where a plurality of target images are matched in a fifth concrete example;
FIG. 20 is a view for explaining another display example in the case where a plurality of target images are matched in the fifth concrete example;
FIG. 21 is a view for explaining still another display example in the case where a plurality of target images are matched in the fifth concrete example;
FIG. 22 is a view for explaining still yet another display example in the case where a plurality of target images are matched in the fifth concrete example;
FIG. 23 is a view for explaining a display example in the case where matching has been done in a sixth concrete example;
FIG. 24 is a view for explaining another display example in the case where matching has been done in the sixth concrete example;
FIG. 25 is a view showing a state where matching is sequentially made in accordance with resolution in an eighth concrete example;
FIG. 26 is a view showing a configuration of a search system in a ninth concrete example;
FIG. 27 is a flowchart for explaining operation in the ninth concrete example;
FIG. 28 is a flowchart for explaining operation in a tenth concrete example;
FIG. 29 is a view for explaining a common data area and individual user area;
FIG. 30 is a view showing an example of a registration rejection message; and
FIG. 31 is a view showing an example of a registration confirmation message.

### Best Mode for Carrying Out the Invention

A preferred embodiment of the present invention will be described below with reference to the accompanying drawings.

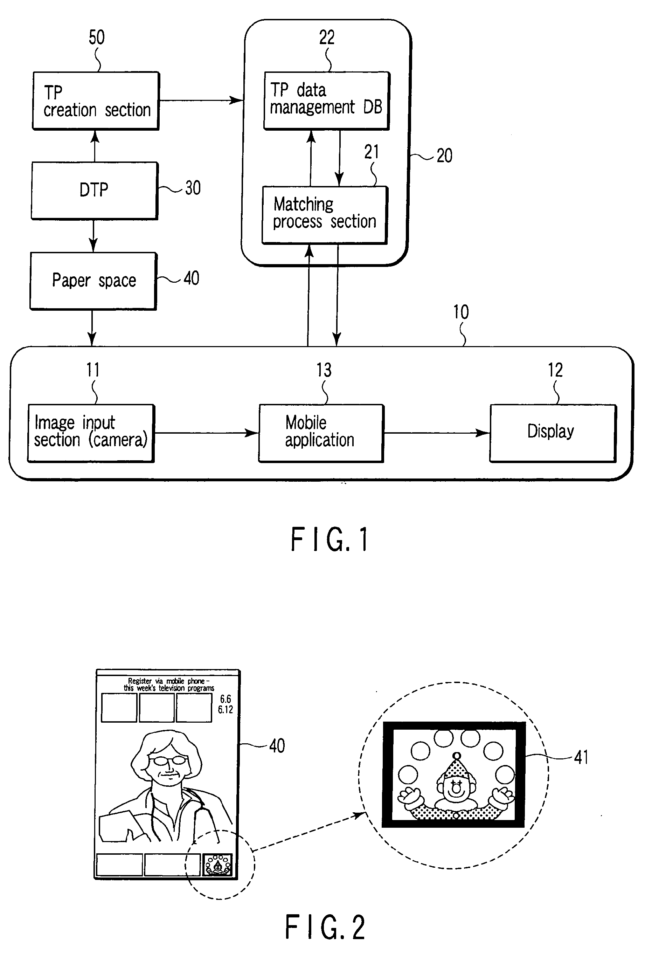

As shown in FIG. 1, a search system according to an embodiment of the present invention is constituted by a mobile terminal with camera 10 such as a mobile phone with camera or a PDA with camera and a search means. The mobile terminal with camera 10 includes an image input section (camera) 11 serving as an image input means for inputting an image and a display 12 serving as an output means for outputting a specific result. The search means uses hierarchically-managed templates to search a database for a given image based on the image input by the image input section 11. The search means is achieved by a mobile application 13 of the mobile terminal with camera 10 and a matching process section 21 provided in a server 20 which is communicable with the mobile terminal with camera 10.

The server 20 further includes a template (TP) data management database (DB) 22 registering a plurality of templates and managing them in a hierarchical manner. The templates to be registered in the TP data management DB 22 are created by a TP creation section 50 from a target image 41 laid out on a paper space 40 by a desktop publishing (DTP) 30 as shown in FIG. 2. That is, in the search system according to the present embodiment, the target image 41 is previously printed on the paper space 40 by the DTP 30, as shown in FIG. 2. At the same time, templates of the target image 41 are created by the TP creation section 50. Then, the created templates are previously registered in the TP data management DB 22 of the server 20. Note that in the case where there are a large number of the target images 41 to be registered, the above creation and registration of the template are repeated.

A user who wants to perform a search uses the image input section 11 such as the mobile terminal with camera 10 to acquire an image of the target image 41 from the paper space 40. Then, the mobile application 13 performs feature extraction from the input image and sends the extracted feature data to the matching process section 21 of the server 20. Upon receiving the feature data, the matching process section 21 performs pattern matching with templates registered in the TP data management DB 22. In this case, the matching process section 21 performs template matching using lower-hierarchy templates to narrow down the number of images to be searched for, following the template matching using upper-hierarchy templates. When a pattern matching result is obtained, the matching process section 21 sends the result information to the mobile application 13 of the mobile terminal 10 with camera. Upon receiving the result information, the mobile application 13 displays the result information on the display 12.

Operations of respective sections will be described below in detail.

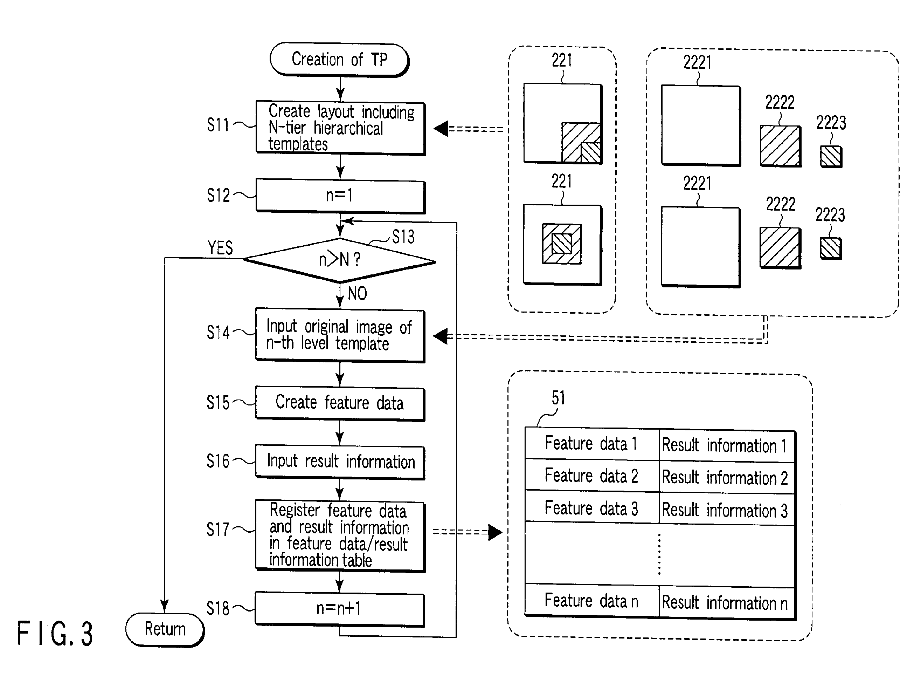

Firstly, hierarchical template creation process in the TP creation section 50 will be described with reference to FIG. 3.

In the TP creation section 50, a user defines a desired area-dividing layout of the target image 41 to be used in respective layers of N-tier hierarchical templates (step S11).

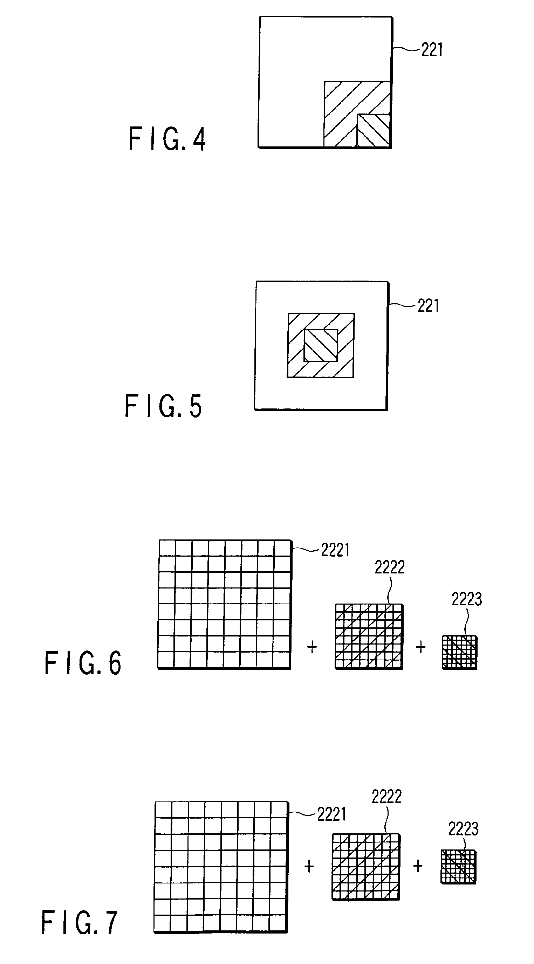

As shown in FIGS. 4 and 5, the area-dividing layout 221 defines, e.g., the cut-out position of an image of each hierarchical template. Alternatively, the area-dividing layout 221 may define the resolution of an image of each hierarchical template.

Further, as shown in FIGS. 6 and 7, the area-dividing layout 221 may be a combination of the cut-out position and resolution of an image. More specifically, in FIG. 6, a 1st-level hierarchical template 2221 in which the entire area of an image is divided into 8×8 segments, a 2nd-level hierarchical template 2222 in which 1/4 area of the entire image is divided into 8x8 segments, and a 3rd-level hierarchical template 2223 in which 1/8 area of the entire image is divided into 8x8 segments are set to a cut-out position such that the lower right corners thereof are aligned with each other. Further, in FIG. 7, the above three templates 2221, 2222, and 2223 are set to a cut-out position such that the centers thereof are aligned with each other. Although the above examples of FIGS. 4 to 7 show the case where N is set to 3, the number of N is not limited to this.

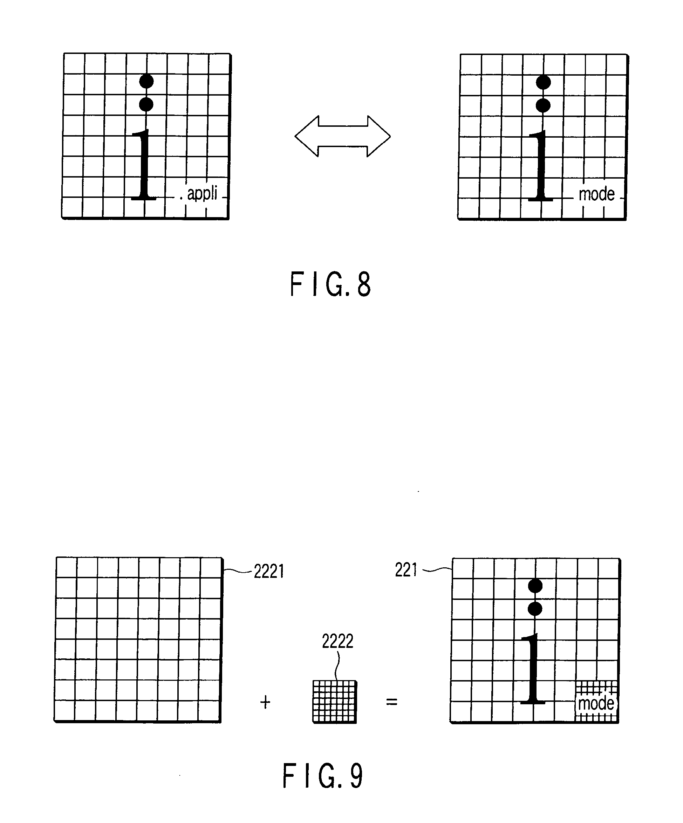

For example, in the template matching, there is a possibility that similar images as shown in FIG. 8 are erroneously matched. On the other hand, as shown in FIG. 9, when a template in which only the lower right area has a high resolution (2nd-level hierarchical template 2222) is used, the possibility of the above matching error can be reduced.

Note that "to define" the area-dividing layout includes "to create" newly the area-dividing layout and "to select" one of the already created area-dividing layouts.

After the above area-dividing layout 221 has been defined, an internal counter n is set to "1" (step S12). After that, it is determined whether the value of the counter n is larger than N (step S13).

In the case where the value is smaller than N, an original image is input according to the defined area-dividing layout 221 (step S14). In this case, the original image to be input is a part of image data in the target image 41 which corresponds to the image cut-out position represented by the area-dividing layout 221. Then, according to the defined area-dividing layout 221, feature data, i.e., n-th layer (n-th level) template is created from the input original image (step S15). After that, result information to be output when a result of the template matching is correct, e.g., the URL and the like of a specific Web site is input (step S16). Subsequently, the feature data and result information are registered in a feature data/result information table 51 provided in the TP creation section 50 (step S17).

After that, the value of the counter n is incremented by 1 (step S18), and the flow returns to step S13 from which the above steps are repeated. When the value of the counter n has exceeded N (Yes in step S13), the TP creation process is ended.

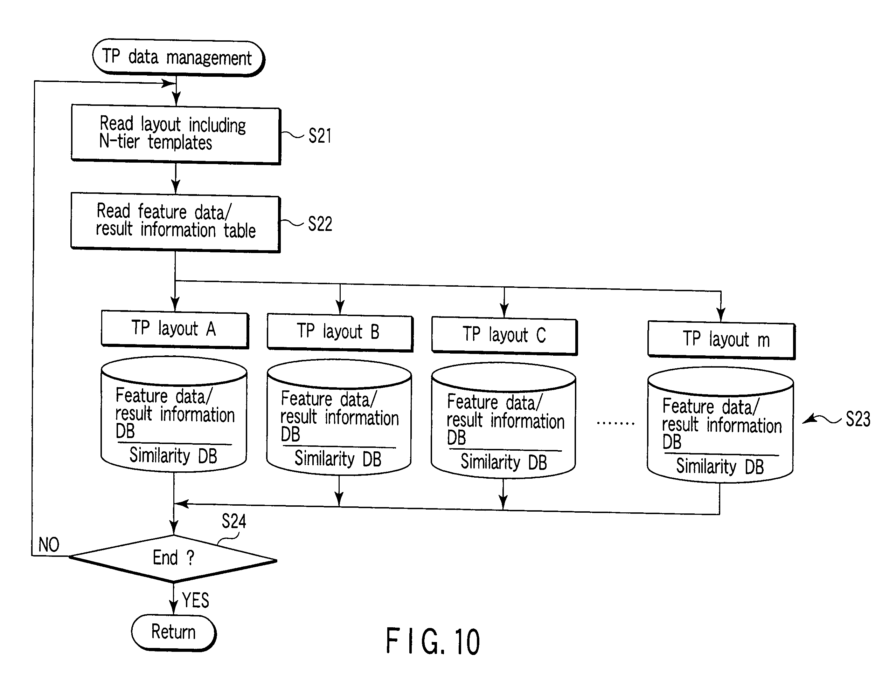

Next, TP data management process performed in the TP data management DB 22 of the server 20 will be described in detail with reference to FIG. 10.

Firstly, in the TP data management DB 22, the area-dividing layout 221 of the target image 41 to be used in respective layers of the N-tier hierarchical templates is read out from the TP creation section 50 (step S21). Then, the content of the feature data/result information table 51 corresponding to the read out area-dividing layout 221 is read out (step S22). According to the read out area-dividing layout 221, the read out content of the feature data/result information table 51 is registered in a database provided for each template layout (step S23). The above steps are repeated for all templates created in the TP creation section 50 (step S24).

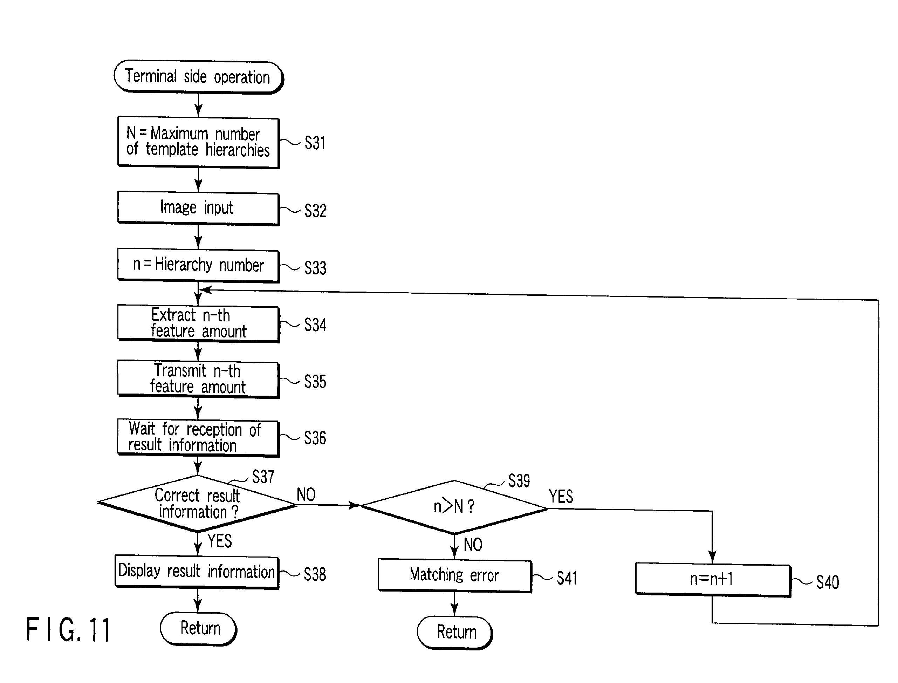

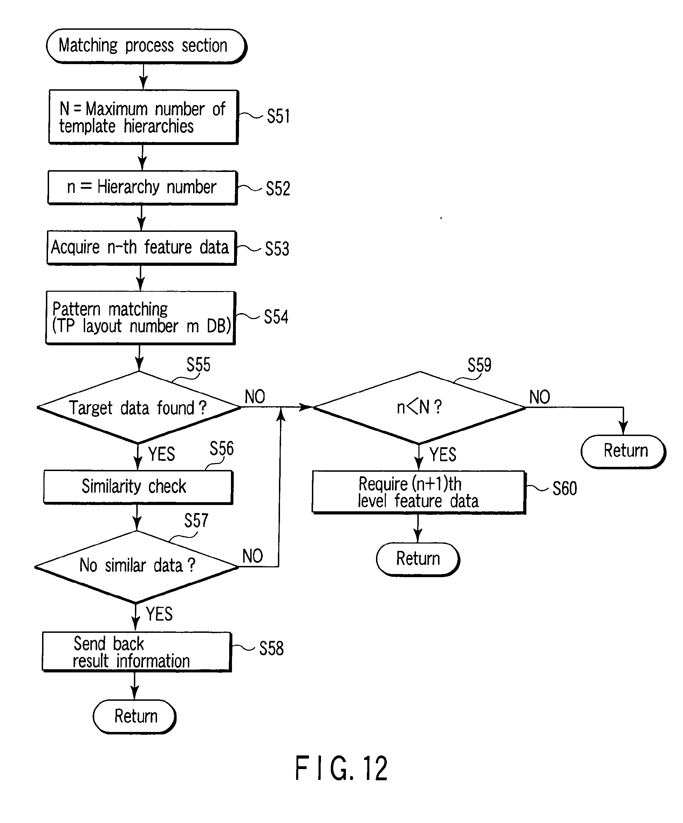

Next, operation of the mobile application 13 of the mobile terminal with camera 10 and details of matching process performed in the matching process section 21 of the server 20 will be described with reference to FIGS. 11 and 12. Although only one mobile application 13 is shown in FIG. 1, actually a plurality of mobile applications 13 exist in the mobile terminal with camera 10. That is, one mobile application 13 is prepared for each template layout, and the mobile application 13 to be activated differs depending on the type of an original target image 41.

Upon activation of a mobile application 13 corresponding to a given target image 41, the mobile application 13 sets the maximum number of template hierarchies determined by the template layout of the mobile application 13 in a not-shown internal counter N (step S31). Then, the mobile application 13 receives, as an input data, an image obtained by image acquisition of the target image 41 on the paper space 40 by the image input section 11 (step S32). Then, the mobile application 13 sets a not-shown internal counter n for counting hierarchy numbers to "1" (step S33).

Thereafter, the mobile application 13 extracts the feature data (n-th level feature value) of n-th level hierarchical area for the image according to the template layout of the mobile application 13 (step S34). The feature data (feature value) includes, e.g., distribution or density of feature points. The mobile application 13 then transmits, to the matching process section 21 of the server 20, the extracted n-th level feature value together with a TP layout number m for specifying the template layout of the mobile application 13 and a current hierarchy number n (step S35). After that, the mobile application 13 enters a standby state for reception of the result information from the matching process section 21 (step S36).

The matching process section 21 of the server 20 sets the maximum number of hierarchies in a not-shown internal counter N according to the received TP layout number m (step S51). Further, the matching process section 21 sets the hierarchy number to be matched in a not-shown internal counter n (step S52), and acquires the received n-th level feature data (feature value) (step S53). Then, the matching process section 21 performs pattern matching between the template registered and managed in the database (which is denoted by the received TP layout number m) of the TP data management DB 22 and acquired feature data (step S54).

In the case where there has found any target data candidates as a result of the pattern matching (step S55), the matching process section 21 performs similarity check (step S56). Further, the matching process section 21 determines whether only one target data candidate whose similarity is more than a predetermined threshold value exists (step S57).

When determining that there is one target data candidate, the matching process section 21 sends back, to the mobile terminal with camera 10, result information registered in the feature data/result information table 51 in association with the feature data of the target data candidate (step S58).

Upon receiving the result information from the matching process section 21 of the server 20 (step S37), the mobile application 13 displays the result information on the display 12 (step S38).

On the other hand, when determining, in step S57, a plurality of target data candidates whose similarities are more than a predetermined threshold value exist, the matching process section 21 then determines whether the value of the internal counter N is larger than the value of the internal counter n (step S59). In the case where the value of the internal counter N is not larger than that of the internal counter n, the mobile application 13 requires the mobile terminal with camera 10 to transmit (n+1)-th level feature data (step S60).

Upon receiving the transmission request of the (n+1)th level feature data from the matching process section 21 of the server 20 (step S37), the mobile application 13 determines whether the value of the internal counter N is larger than the value of the internal counter n (step S39). In the case where the value of the internal counter N is not larger than the value of the internal counter n, the mobile application 13 increments the value of the counter n by 1 (step S40), and flow returns to step S34 from which the above steps are repeated. As a result, the (n+1)th level feature data is transmitted to the matching process section 21 of the server 20.

After that, the matching process section 21 of the server 20 executes the above-mentioned process for the (n+1)th level feature data. In this case, however, the matching process section 21 performs pattern matching preferentially for the plurality of target data candidates that have existed in the previous pattern matching.

Thus, the above-mentioned processes are repeated between the mobile application 13 and matching process section 21 until the feature data has matched one template.

Note that when determining that the value of the internal counter N is larger than that of the internal counter n in step S39, the mobile application 13 displays an error message as matching error on the display 12 (step S41) and ends this flow.

Hereinafter, concrete examples will be described with reference to the drawings.

### [First Concrete Example]

In the first concrete example, a mobile phone with camera is utilized to easily enjoy mail-order shopping on mail-order magazine/catalog.

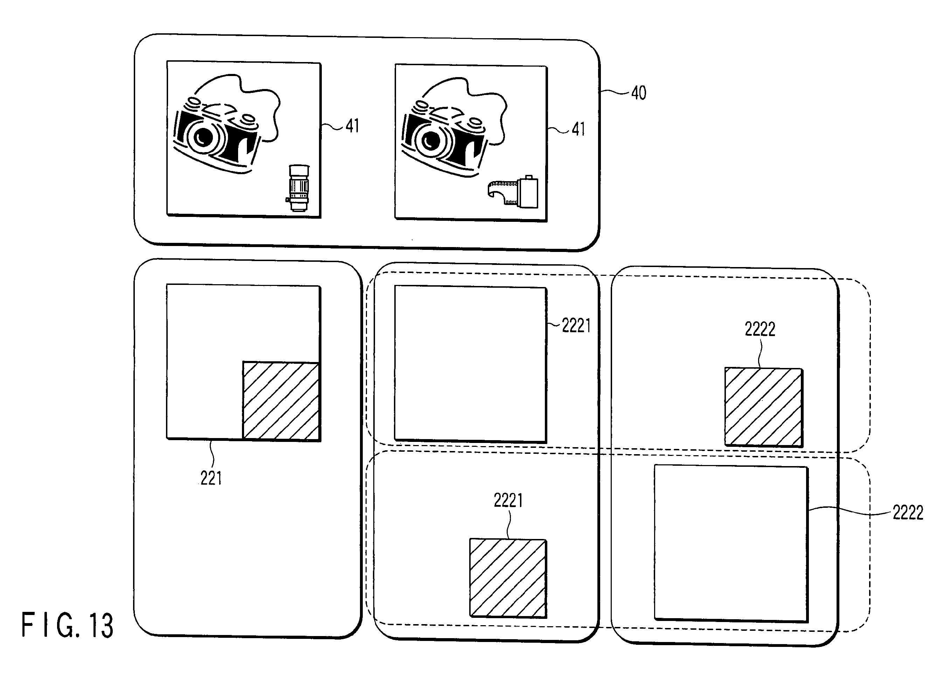

In the case where a main product and its optional extras are sold in a set on the mail-order magazine/catalog, the image of the main product (camera) may be printed large while the images of optional extras (interchangeable lens or film) may be printed small on the paper space 40 in some cases, as shown in FIG. 13. In such a case, the similarity between the target images becomes so close that it is difficult to distinguish one target image from another.

In order to cope with this, the entire target image 41 is previously registered as the 1st-level hierarchical template (1st-level hierarchical template 2221), and its notable area is previously registered as the 2nd-level hierarchical template (2nd-level hierarchical template 2222). As a result, even in the case where the feature value is extracted (by feature point distribution method or template density method) from an image acquired at a comparatively low resolution, only the 2nd-level hierarchical template (matching engine) is specified, so that recognition error rate is small and the capacity of the feature value data itself is small due to rough resolution of the original image.

Further, the layout (area-dividing layout 221) defining the 1st-level hierarchical template and 2nd-level hierarchical template is also registered.

Subsequently, the target image 41 is input. The mobile application 13 then extracts the feature data of the area in the 1st-level hierarchical template, and the matching process section 21 of the server 20 performs matching process for the extracted 1st level feature data. In the case where there has found a plurality of calculation results more than a predetermined threshold value, the feature data of the area in the 2nd-level hierarchical template 2222 is extracted and pattern matching is performed.

When the size of the feature data (resolution of the feature data) used in the pattern matching in the 1st-level hierarchy and 2nd-level hierarchy is made equal to each other, the feature extraction process or pattern matching process can be made common in respective hierarchies as well as setting of different feature extraction process is also effective. Further, a method may be adopted in which the image is divided into, e.g., 9 segments in the feature extraction in the 1st-level hierarchy and feature value extraction for only a part corresponding to a given segment (or segments) is performed. In the case of a mobile phone, the given segments can be specified by a numeric keypad. For example, the upper right segment is specified by "3", or center segment is by "5". After that, a predetermined 2nd-level hierarchical database is specified by a 1st-level hierarchical matching engine (and database) and determination matching is made. Further, at the maximum estimate, a communication throughput during this process requires only 10 kB in VGA class. In other words, it is known that a result is not changed even when the above process is performed with high-resolution data or the number of combination of feature point layouts exceeding 10 kB. This is the same in the template method. In this case, when the capability is designed based on the role of 1st-level hierarchy, even the template setting at 16×16 segments (feature value size: 256) is enough, and the feature value in this case is also about 2 kB. Therefore, the feature value to be exchanged in a communication line is significantly reduced as compared to a conventional approach. Also as for a communication capacity on the mobile phone line, there is no problem since the data amount is 10 kB or less, thus offering an advantage in terms of an increase in communication speed.

### [Second Concrete Example]

Anyone can access a Web page only by inputting the URL thereof. On the other hand, it is often the case that when accessing a Web page (premium content) that only those who have bought a magazine such as a photo book can browse, a user needs to become a member of the site and input user name and password as a means for limiting access of the Web page. In the case of a Web site for a mobile phone, input of the user name and password on the terminal is very troublesome work.

The second concrete example shows a configuration in which such a Web page can be browsed only when the target image 41 on the paper space 40 is read out using the mobile phone with camera 10 having the mobile application 13.

More specifically, the target image 41 on the paper space 40 is divided into the 1st-level hierarchical template (1st-level hierarchical template 2221) and 2nd-level hierarchical template (2nd-level hierarchical template 2222), and the 1st-level hierarchical template is associated with a premium ID. Then, the target image 41 on the paper space 40 is input, and template matching process is performed for the 1st-level hierarchical template and 2nd-level hierarchical template, respectively. The server 20 requests a Web page to be dynamically generated in a time-limited manner only when the URL which is result information obtained as a result of the template matching specifies a premium site as described above. Thus, only when the target image 41 has been read in from the paper space 40 and image matching is achieved, the target Web page is generated, and a user can browse the generated Web page.

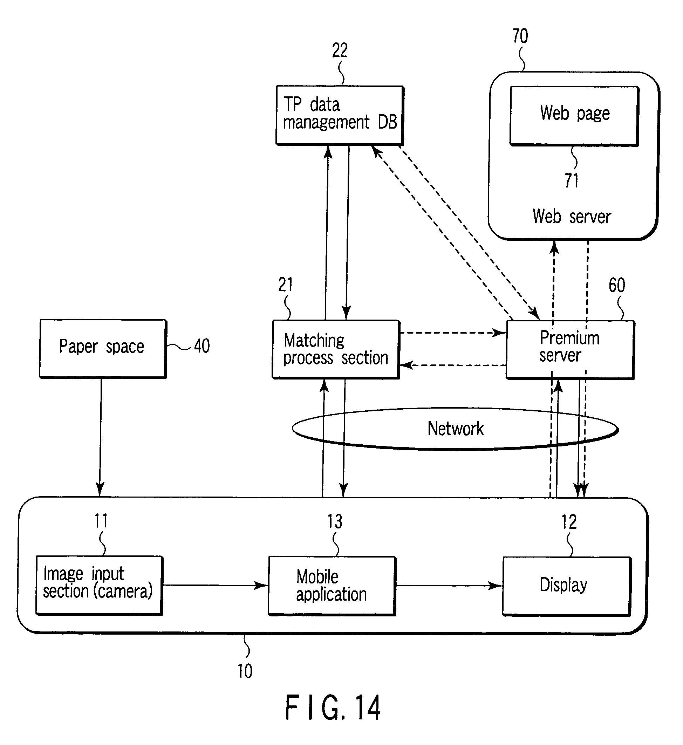

Although the Web page is dynamically generated in the above example, it goes without saying that, as shown in FIG. 14, a configuration in which a premium server 60 performs authentication process of the premium ID to thereby provide dynamic access control to a statically-prepared Web page 71 on a Web server 70 obtains the same advantage as in the case where the Web page is dynamically generated.

### [Third Concrete Example]

In the case where the matching process is performed on the mobile terminal with camera 10 such as a mobile phone or a PDA, it is possible to provide the TP data management DB 22 on the mobile terminal with camera 10 side. However, it is often the case that it is disadvantage for the mobile terminal with camera 10 to manage a large amount of reference feature value data (templates) in terms of memory capacity and calculation speed. Further, the template is frequently updated, so that the mobile terminal 10 needs to constantly download a template from the server 20. Therefore, it is more advantageous that the image matching process is performed on the server 20 side than on the mobile terminal 10 side in terms of memory capacity and calculation speed. In this case, however, the feature data must be transmitted to the server 20 every time the target image 41 is input to the mobile terminal 10 side. In the case where a method (Vipr) that defines the feature value based on the positional relationship of the feature points of the target image 41 is adopted, the recognition accuracy and matching speed are determined by the resolution at the time of image acquisition of the target image 41 which is used in the calculation of the feature value. The higher the resolution, i.e., the more the number of pixels at the time of image acquisition, the higher the recognition accuracy becomes, while the matching speed becomes low due to an increase in the number of times of calculations. Therefore, when the hierarchical matching process is performed, a configuration in which the feature values of respective hierarchies whose resolution with respect to the same target image 41 differ from one another in a stepwise fashion are managed in the TP data management DB 22 is advantageous.

The present concrete example is an example in which a mobile phone with camera is used as the mobile terminal with camera 10 and is applied to the case where the mobile terminal with camera 10 acquires a previously registered image to recognize the acquired image to thereby perform a predetermined operation such as voice output, activation of a predetermined program, or display of a predetermined URL. In particular, the present example is a method effective in the case where an enormously large number (more than 1,000) of images are previously registered. Further, the method is effective in the case where images having high similarities are included in the registered images.

In image recognition, image data is registered as so-called dictionary data. However, it is effective and practical not to directly compare images but compare the feature values of images. In the present concrete example, the positional relationship of the feature points of images is calculated as a combination of vector quantities, and a plurality of the combinations are defined as the feature value. At this time, the accuracy of the feature value differs depending on the number of the feature points that appear. The higher the resolution of an original image, the more the number of feature points can be detected, so that the feature value is calculated under a high resolution condition for the same original data. At this time, when the feature value is calculated based on an image whose resolution has been reduced with respect to the same image material, the number of feature points becomes comparatively small, which reduces the capacity of the feature value itself. When the capacity is small, matching accuracy becomes comparatively worse. However, the small capacity brings about high matching speed and high communication speed on a mobile communication line. In view of this, in the present concrete example, when an image is registered as reference data (template), the feature values are calculated based on a plurality of resolutions in registering the same image material, and a plurality of databases (TP data management DBs 22) corresponding to the respective resolutions are provided. The respective databases are connected to corresponding matching servers (matching process sections 21) and configured to operate in parallel.

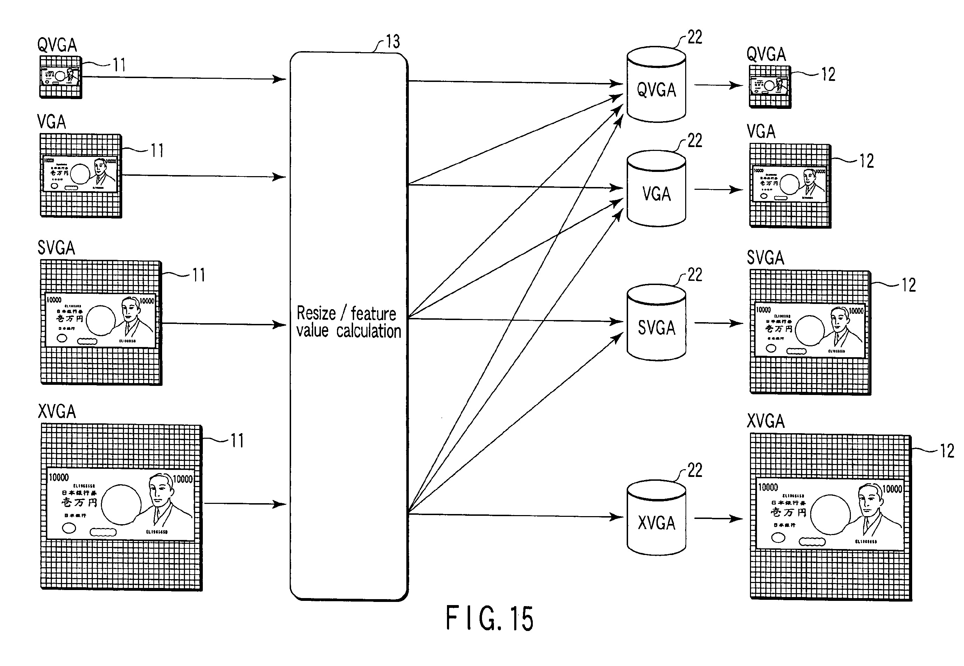

For example, as shown in FIG. 15, assume that a plurality of matching process sections 21 and TP data management DBs 22 are clustered and are provided in substantially the same coordinate positions in a network. The feature values of the same target image 41 are managed in the TP data management DBs 22 in a hierarchical manner. In this case, the resolutions of the original image at the time of calculation of the feature value differ between the respective TP data management DBs 22. For example, the resolution level includes QVGA, VGA, XGA, SXGA, and the like.

After such a matching process system is prepared, an image of an already-registered design is acquired using the image input section (camera) 11 of the mobile phone, and the feature value is calculated using the mobile application 13 on the mobile phone based on the positional relationship of the feature points. Assuming that the camera resolution is 2-million pixel class, matching process is performed using data from the TP data management DB 22 of 2-million class resolution, thereby reducing recognition error rate. However, the matching process simultaneously being performed with the TP data management DB 22 of low resolution (e.g., VGA class) operates at high speed, so that a result of the matching is sent to the mobile phone first. As described above, it is advantageous for the matching process sections 21 to be arranged in parallel based on the resolution level of the original image, in terms of process speed and recognition accuracy.

For example, an image of a ten thousand yen bill is input at a QVGA level, the feature value of the image is calculated at its resolution level, and the calculated feature value is sent to the cluster of the matching process sections 21. Then, naturally, the matching process section 21 that performs matching for the TP data management DB 22 storing templates of QVGA level resolution hits first and sends back a predetermined recognition result. Although there is some time difference, the same recognition results are expected to be obtained by the other matching process sections 21.

Further, assume that an image of the ten thousand yen bill is input at an SXGA level and the feature value of the image calculated at its resolution level is sent to the respective matching process sections 21. Also in this case, a matching result from the matching process section 21 of a QVGA level is expected to be sent back at first. After that, matching results are sent back from respective matching process sections 21 of a VGA level, XGA level, SXGA level, ... with a slight time difference. Initially, the recognition result merely identifies "ten thousand yen bill" and, as the resolution is increased as described above, the recognition result identifies more detailed part, e.g., "ten thousand yen bill having an image corresponding to XDA3248798PSP at the number area". Further, as described above, the capacity of the feature value itself is large in the high-resolution matching process section 21 and, in XGA class, the feature value is increased up to about 40 KB. However, the feature value is reduced to about 10 KB due to previous low-resolution matching process. Further, when a configuration in which the 2nd and subsequent levels matching process sections 21 and TP data management DBs 22 each have retain only difference data from the database whose resolution becomes gradually reduced is adopted, the size of the database structure can be reduced, leading to an increase in recognition speed.

As described above, the resolution of the entire part or a part of an image is calculated from the same image to thereby realize hierarchization in effect. This is more advantageous in terms of both the recognition speed and recognition accuracy than in the case where a plurality of databases are used to perform distributed process in the matching engines in a cluster manner.

Further, in this system, even if the initial recognition result is error, correction is possible since it is highly possible that the subsequent recognition result is correct.

In registering the feature value to the TP data management DB 22, the feature value of a target image 41 is calculated at a high resolution first, then the feature value is calculated one after another while the resolution is reduced, and the above calculated feature values are registered in the DB of the corresponding resolution.

In the case where the matching is performed for the target image 41 scanned at high resolution, contrary to the above registration process to the TP data management DB 22, the feature value is calculated after the scanned image is resized on the mobile application 13 of the mobile terminal with camera 10. Then, the feature value is transmitted to the TP data management DB 22 and matching process section 21 of the corresponding resolution. After that, the feature value is calculated once again with the resolution further increased, and the feature value is transmitted to the TP data management DB 22 and matching process section 21 of the corresponding resolution. The above process is repeated until the resolution has reached the resolution at the scanning time.

As an application of the method, a method as described below may be employed. That is, target objects are subjected to matching by the TP data management DB 22 and matching process section 21 of a low resolution and thereby the target objects are roughly categorized. Then, another matching process is performed for the TP data management DB 22 and matching process section 21 corresponding to the category. For example, in the case where a ten thousand yen bill is input as the target image 41, matching result obtained from the matching process in the respective hierarchies or at the respective resolutions (for example, matching is done with an image category [book jacket, newspaper, book coupon, ticket, bill, poster] at a low resolution and, as the resolution is gradually increased, matching is done with the following image categories: [book coupon, card, ticket, bill], [Japanese banknote, dollar bill, euro banknote, yuan bill, won bill], [one thousand yen bill, two thousand yen bill, five thousand yen bill, ten thousand yen bill], [new ten thousand yen bill, old ten thousand yen bill], ...) is used to preferentially search the TP data management DB 22 associated with a given image category to thereby increase search speed. Further, even if a recognition error has occurred, correction is possible since a search result obtained at a high resolution is more accurate.

### [Fourth Concrete Example]

In the case where the matching process is performed on the mobile terminal with camera 10 such as a mobile phone or a PDA, it is possible to provide the TP data management DB 22 on the mobile terminal with camera 10 side. However, it is often the case that it is disadvantage for the mobile terminal with camera 10 to manage a large amount of reference feature data (templates) in terms of memory capacity and calculation speed. Further, the template is frequently updated, so that the mobile terminal 10 needs to constantly download a template from the server 20. Therefore, it is more advantageous that the image matching process is performed on the server 20 side than on the mobile terminal 10 side in terms of memory capacity and calculation speed. In this case, however, the feature data must be transmitted to the server 20 every time the target image 41 is input to the mobile terminal 10 side.

In the case where the feature value is used to perform image recognition, when the number of the feature value data managed in the TP data management DB 22 is increased, there is a possibility that the number of data whose feature values are closed to each other is increased, resulting in an increase in search time. Therefore, it is desirable to delete unnecessary feature value data as quickly as possible.

Further, assume that result information has been obtained as a result of image recognition using the feature value. In this case, there is a possibility that the obtained result information is old, or information specified by the result information has been deleted. For example, this is a case where a Web site specified by the URL indicated by the result information has been deleted. In the case of Web service for a mobile phone, a communication charge is required even if the mobile phone cannot connect to a Web site, in some cases.

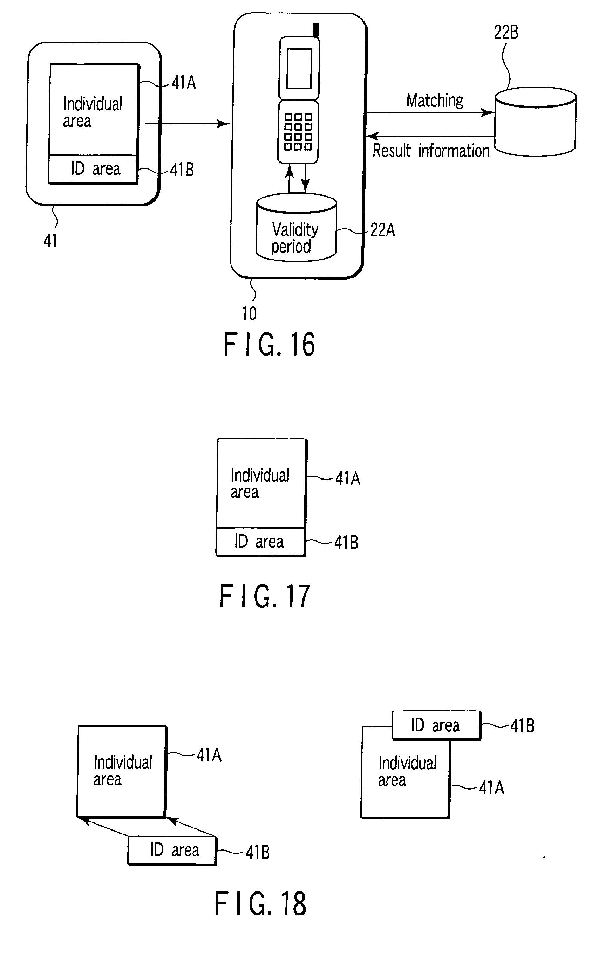

In the present concrete example, as shown in FIG. 16, the image area of a target image 41 to be recognized is divided into an individual area 41A and ID area 41B. Then, validity period (e.g., one week, one month, three months, six months, or one year) is set in the feature value of the ID area 41.

The number of the feature values of the ID area 41B can be reduced and thereby the size thereof can be reduced. Therefore, it is possible to provide an ID area TP data management DB 22A on the mobile terminal with camera 10 side. That is, before communicating with an individual area TP data management DB 22B through a network for search operation at the time of image input, the mobile terminal with camera 10 can search the ID area TP data management DB 22A provided therein at high speed to thereby indicate to a user whether the validity period has elapsed or not.

The individual area 41A and ID area 41B in the target image 41 to be recognized may be positioned fixedly as shown in FIG. 17 or may be positioned relatively to each other as shown in FIG. 18.

### [Fifth Concrete Example]

In the case where the matching process is performed on the mobile terminal with camera 10 such as a mobile phone or a PDA, it is possible to provide the TP data management DB 22 on the mobile terminal with camera 10 side. However, it is often the case that it is disadvantageous for the mobile terminal with camera 10 to manage a large amount of reference feature value data (templates) in terms of memory capacity and calculation speed. Further, the template is frequently updated, so that the mobile terminal 10 needs to constantly download a template from the server 20. Therefore, it is more advantageous that the image matching process is performed on the server 20 side than on the mobile terminal 10 side in terms of memory capacity and calculation speed. In this case, however, the feature data must be transmitted to the server 20 every time the target image 41 is input to the mobile terminal 10 side.

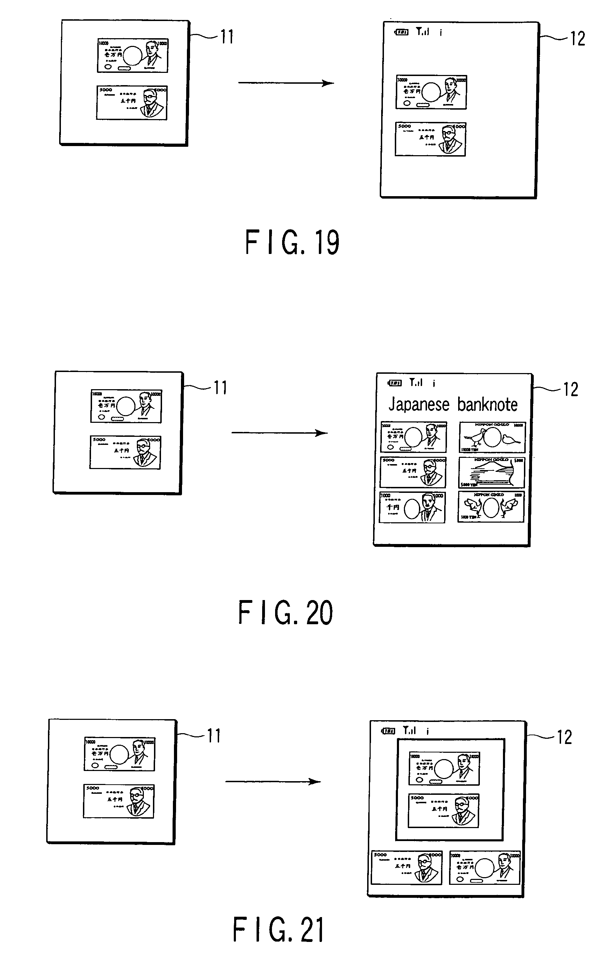

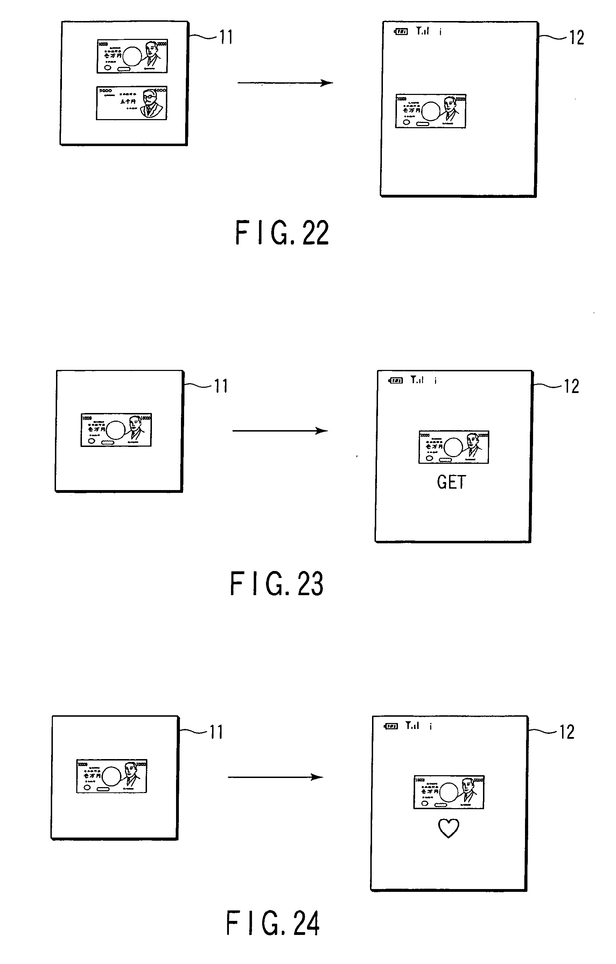

In this case, extraction of the feature value is performed for one acquired image, and then the mobile terminal with camera 10 inquires the server 20. At this time, there is a case where a plurality of target images 41 are included for one image. In such a case, the following methods are effective.
· In the case of a plurality of target images are matched, all result information related to matched target images 41 are displayed as shown in FIG. 19.
· In the case of a plurality of target images are matched, information associated with the AND information of respective matched result information is displayed. For example, when "tulip" and "cherry blossom" are recognized, information of pictorial book of flora is displayed.
· In the case of a plurality of target images are matched, a user is allowed to select one of the information to be obtained as shown in FIG. 20.
· In the case of a plurality of target images are matched, the original image used at the time of reference feature value calculation performed on the TP data management DB 22 side is displayed as shown in FIG. 21. In this case, result information is displayed on a part (e.g., lower part) of the display area staring from the target image 41 closest to the center at the time of the image input.
· In the case of a plurality of target images are matched, only the result information matching the target image 41 closest to the center as shown in FIG. 22.

With the above method, operability that matches the intention (to want the original image to be recognized) of the user can be realized.

### [Sixth Concrete Example]

When the result information is displayed immediately after recognition of an image, there is a possibility that a user cannot determine which target image 41 in the input image has been recognized.

In order to cope with the above problem, a text like "Get" or design like "Heart mark" is explicitly displayed on the area at which the feature value has been extracted with respect to the target image 41 in the input image, as shown in FIGS. 23 and 24.

This indicates to the user the target image 41 to be recognized and enables the appropriate result information to be displayed by the user's operation (depression of a button, etc).

### [Seventh Concrete Example]

A case where the search system according to the present embodiment is applied to a card game will next be described.

In the present concrete example, a card game is performed using, as the mobile terminal with camera 10, a mobile phone with camera or a PDA having a communication function capable of being combined with a image acquisition device.

Images of cards arranged in a field are acquired as a target image 41, recognition is made, and various results are provided to a user according to the recognition result.

In the case where a plurality of cards exist in the screen, one closed to a previously set reference point such as center of the screen is selected.

Further, in the case where a plurality of cards are captured in the screen, the information to be displayed may be switched by a combination of the plurality of cards. Naturally, not only by a combination of card types, but also by relative direction of the cards, the information to be displayed may be switched. In addition, even if one card is captured in the screen, by the direction or position relative to the screen, the switching of the information may be made.

Further, by moving the mobile terminal 10 upward relative to the screen, recognition of indication concerned with the card can be made. This is realized by recognizing the design and the like of a given card to understand that the card is a specific one and by tracking the movement of the card relative to the screen utilizing the images information (optical flow or design itself of the card, or natural feature points represented by the corners or edges of the picture) within the screen.

Further, by tracking the movement of the mobile terminal 10 based on the information within the screen, it is possible to switch output information, for example, information of the recognized card. For example, when the mobile terminal 10 is moved upward after capturing of a card, information related to "attack" or voice is offered; and when the mobile terminal 10 is rotated, evolutionary information of a character described on the card is offered.

The criterion of selection in the case where a plurality of cards are captured is not limited to the above examples. For example, a card whose horizontal and vertical lines are aligned with the screen and the head and tail thereof agree with a registered one may preferentially be selected in the case where registration has been made in a state where the posture of the camera faces just in front of cards.

Further, a plurality of registered images corresponding to a plurality of recognized cards may be displayed (image like a tab) as a strip line on a part of the screen for user's selection.

When the recognition has been made, a text like "Get" or design of a star mark is displayed on/around a recognized one (in real time). Alternatively, a recognized area is surrounded by a line for notification to the user that recognition has been made. The brightness of a recognized area may be changed such that the area appears to be shining. Further, as a matter of course, sound/voice can be utilized. Furthermore, related information such as a registered image, the name thereof, and the like that has been recognized may be superimposed on the scanning image of the camera at the lower portion (e.g., lower right portion) of the screen. This is an effective presentation to the user. In this case, the screen image may be paused. That is, update of the screen is stopped by a specified time period at the moment of the recognition, allowing the user to know the recognized state. After the specified time period has elapsed, the screen image is in an update state once again.

### [Eighth Concrete Example]

A case where the search system according to the present embodiment is utilized in a given limited environment such as a theme park will next be described.

In this case, symbols attached onto tickets, area maps, signs near the gate, and the like, are captured at entrance time by the mobile terminal with camera 10, and thereby all or a part of contents in the theme park can previously be stored in the storage area in the mobile terminal 10. The storage area may be an embedded memory or an independent medium such as a memory card. As a matter of course, a memory card in which the contents have been stored may be distributed.

For example, when an image of a desired attraction on the map is acquired by the image input section 11, the content related to the attraction can be obtained as result information.

Further, when the signs near the individual attractions, appearances of attraction facilities, gates and the like are registered as a feature area corresponding to each content, the signs, appearance of attraction facilities, gates, and the like can be viewed on the mobile terminal with camera 10 that has downloaded the content. Or, simply by acquiring the image of the above objects, corresponding content can be enjoyed. For example, when a user uses the mobile terminal with camera 10 to acquire the image of the gate of a facility while waiting in line, he or she can enjoy the overview of the facility which is sent to the mobile terminal with camera 10 as result information in the form of character animation. Further, the user can enjoy a game in association with the attraction in the facility. In this case, the result (or score) of the game may play a role of parameters for changing the representation in the facility. The result (or score) of the game is transmitted to the server 20 installed in the theme park by a communication line at the time when the game is ended. Further, when the image of the gate is acquired once again at the attraction start time, login of the user is notified to the server.

Although there are the same types of signs in the theme park, such as a sign indicating a food corner or a toilet, it is possible to limit objects to be recognized from the current position of the user by using a location identifying device provided in the mobile terminal with camera 10, such as a GPS or system utilizing radio field intensity between base stations. Assume that a user located in the center of A-zone scans the sign of a food corner. In this case, it is possible to limit matching candidates at the very start to restaurant A, attractions B, C, and D, and souvenir-shops E and F which may be viewed from the user's location, thereby drastically improving matching efficiency.

Since a large number of users may utilize such a system, it is conceivable that a sufficient communication bandwidth/speed cannot be ensured. To cope with this situation, when an acquired image is transmitted, rough image information P0 is first transmitted, and then difference information dP1 from the P0 for forming an image P1 having a higher resolution is transmitted. The server sends back a search result related to the P0 and, subsequently, sends back a search result related to the P1. In this manner, communication is performed between the mobile terminal with camera 10 and server in an asynchronous manner to allow a user to acquire the search results. This enables such multiplexed information to be exchanged without impairing usability. When the feature value extracted from an image is transmitted, transmission order is determined in accordance with the level of importance of respective feature elements. That is, transmission should be made starting from the feature element having a high importance level.

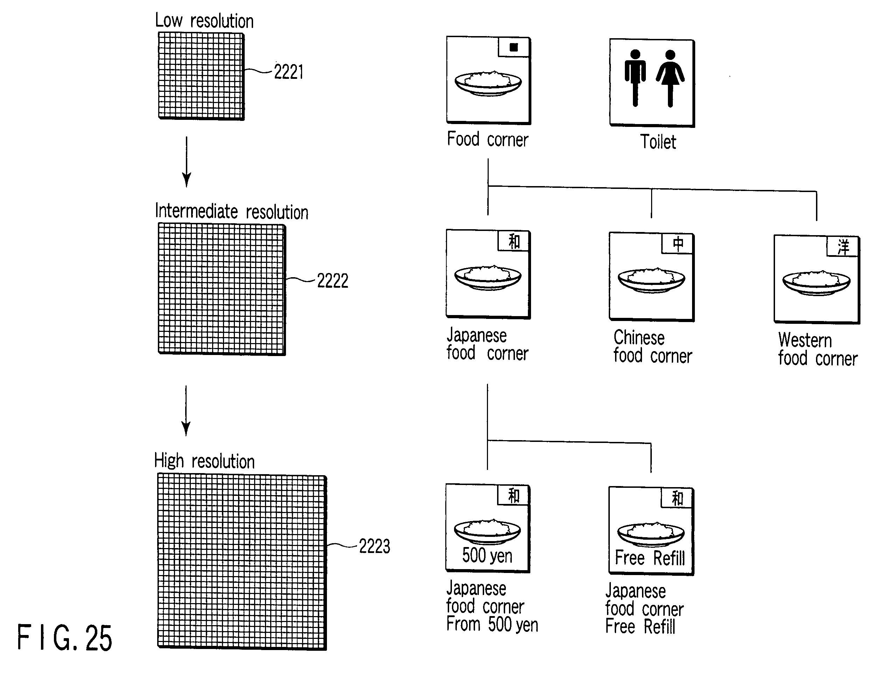

In the matching server that can accept multiplexed information, information to be associated with low resolution information may be grouped. For example, as shown in FIG. 25, in the case where specific shop information is displayed on a part of a sign that represents the type of a facility, it is difficult to identify the shop information at a low resolution. Therefore, information on a server corresponding to a low resolution are only associated with the type of the facility, and information on a server corresponding to a high resolution are associated with specific shop information. By changing the density of the information on the matching server in accordance with the resolution/amount of base information as described above, matching information sequentially transmitted to the user gradually becomes more detailed, thus improving usability.

### [Ninth Concrete Example]

A case where the search system according to the present embodiment is applied to the marketing of catalog sales and actual product sales will next be described.

In the present concrete example, a mobile phone with camera is used as the mobile terminal with camera 10. The mobile application 13 provided with the technique of the present embodiment is previously downloaded to the mobile phone with camera or installed thereon at the time of sale.

In the present concrete example, the mobile application 13 on the mobile phone with camera side has a function of sending acquired images to a predetermined server from which a user can arbitrarily select a desired image, once displaying an answer from the server, and activating a browser when connecting to a mobile site.

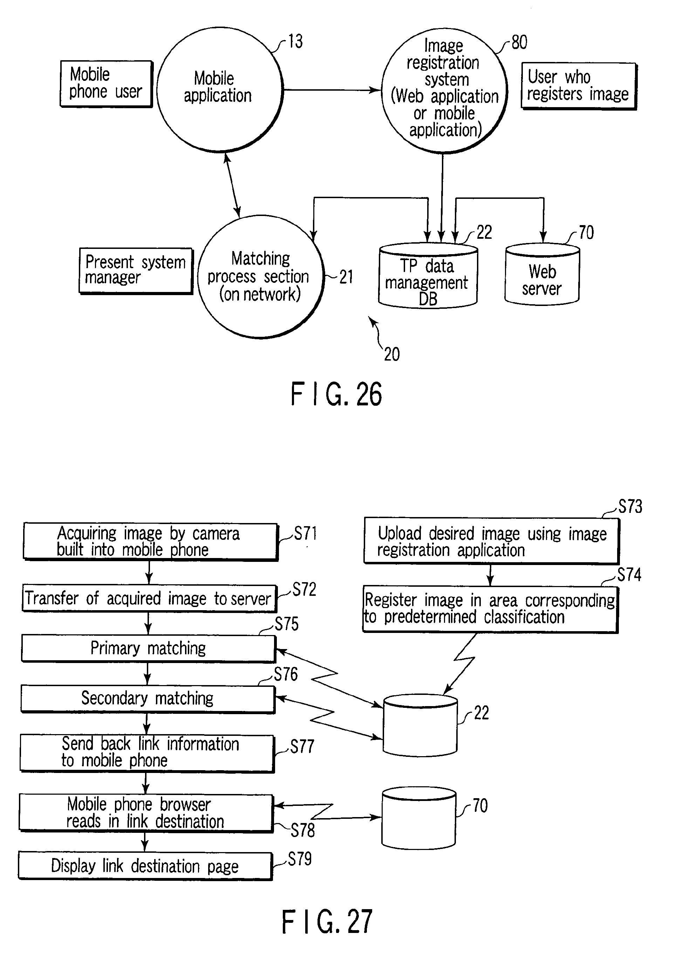

As shown in FIG. 26, the search system according to the present concrete example is mainly composed of three software applications: mobile application 13 installed on the mobile phone with camera, a software application of the matching process section 21 provided in the server 20, and an image registration system 80.

As shown in FIG. 27, the mobile application 13 activates, as described above, a camera serving as the image input section 11 built into the mobile phone, acquires an image of an target object according to a user's instruction (step S71), and sends the acquired image to the matching process section 21 of the server 20 through a network (step S72). In this case, preliminary process such as image compression, edge enhancement, contrast control, feature value extraction or a partly feature value evaluation is performed on the mobile terminal with camera 10, and the image that has been subjected to the above process is sent, together with its original image and/or separately, to the server side. The mobile application 13 may have a matching function of the image feature value. However, it has been revealed, by the present inventors, that a configuration, in which image is transmitted as the feature value that has been generated from the formation of the feature of each feature point or intensity of the feature points and recognition is made on the server side, is basically advantageous in terms of process time.

As described above, the most important function of the matching process section 21 is to perform matching between the transmitted feature value and reference images registered by the image registration system 80, each of which is stored in the TP data management DB 22 as templates in accordance with the image resolution or obtained by changing the image resolution in a stepwise manner.

The image registration system 80 serves as an introduction part in the present technique at the time of use and has a function of registering an image serving as a trigger of information provision or an image to be retrieved. In the present concrete example, the image registration system 80 is accessible in the form of a Web application. A use of the form of a Web application reduces restriction on the time and place when/where a user who wants to register images registers them. Further, this point makes it very easy to construct a charging system of the present search system in the case where the charging series with respect to image registration is set.

Further, it is effective to use the image registration system 80 in the form of the mobile application 13 in terms of convenience of registering images. In this case, a camera (image input section 11) of the mobile phone is used in the form the mobile application 13 to acquire an image. The acquired image is then registered in a specified or user's designated database (TP data management DB 22) by the mobile terminal with camera 10. At the same time, information associated with the image can be registered. For example, URL can be exemplified as the information, which associates the image with a Web page (content site) on a Web server. In addition, by specifying a keyword by a text, site search can be made on a general search engine.

When an image is registered from a camera of the mobile phone, a registered image is transmitted from the mobile phone to the TP data management DB 22 (step S73). Then, the transmitted image is registered as a 2nd-level hierarchical template (2nd-level hierarchical template 2222) and, at the same time, an image whose resolution is reduced is regenerated from the transmitted image to create a 1st-level hierarchical template (1st-level hierarchical template 2221) for registration (step S74). This is because that it is disadvantageous for the same image to be transmitted more than once from the mobile phone in terms of time and usage fee.

As described above, it is preferable that the image registration system 80 and mobile application 13 be integrated as one software application on the mobile phone. This is because that the both software applications have the same function of acquiring an image on the mobile phone and transmitting the image to the server. This integrated software application is referred to as "registerable mobile application". When the mobile application 13 is started on the mobile phone, the registerable mobile application can determine whether the operation to be performed next is "registration" or "search" after the image acquisition. Further, immediately after the start of the mobile application 13, the registerable mobile application can specify the matching process section 21 of a specific server 20 or specific TP data management DB 22. In this case, whether the operation to be performed next is "registration" or "search" can also be determined at this time point.

In the case where "search" is specified, an image is transmitted as described above in step S72. Upon receiving the image, the matching process section 21 performs primary matching using the 1st-level hierarchical template 2221 registered in the TP data management DB 22 (step S75) and, further, performs secondary matching using the 2nd-level hierarchical template 2222 (step S76). Then, the matching process section 21 sends back information associated with a matched image, e.g., link information such as URL (step S77). Upon receiving the link information, the mobile application 13 activates a mobile phone browser to read in the link destination Web page on the Web server 70 (step S78), and displays the page (step S79).

An example of an additional function in the case where the present search system is utilized in so-called catalog shopping using a mail-order magazine/catalog will be shown below.

As to a mail-order catalog, there are cases where individual pictures of articles for sale are arranged on the entire page and many types of articles are arranged in one picture. In the former case, it is likely that a plurality of pictures of articles are captured by an image acquisition using the mobile terminal with camera 10. In such a case, the present search system calculates the feature value corresponding to the individual pictures of articles and displays respective article names and/or URLs on the next screen. Two types of display methods are adopted in this system. One is to arrange the respective article names and/or URLs in correspondence with the layout of the image acquired articles. The other is to arrange the list of the respective article names and/or URLs starting from the picture of the article captured in the center of the acquired image.

Although not limited to the mail-order shopping, the mobile phone utilizes base station information or GPS signals to take the location of a user into account to thereby automatically switch between the matching process sections 21 or the TP data management DBs 22 based on the position information. This allows other information (more useful information for the recognized position) to be displayed from the same picture or poster.

### [Tenth concrete example]

When an image is registered by the image registration system 80 in the above ninth concrete example, there is a case where a very similar image to an image that has already been registered is to be registered. Generally, in such a case, the similarity is evaluated and, when the similarity between the two similar images is higher than a threshold value, the registration is not permitted.

However, in the case where an image is slightly different from the registered one but the same result information needs to be obtained (for example similar but slightly different image of a picture of an article or logo of the same company is to be registered), it is inconvenient for the image not to be registered.

Thus, with respect to an image group registered by a given member, it is preferable to permit the registration on their own account if the similarity between images is close.

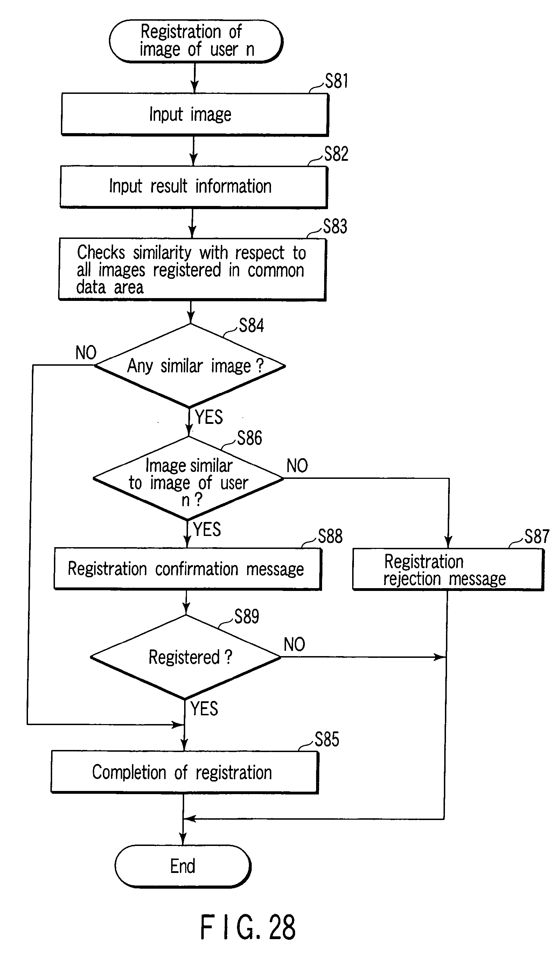

As shown in FIG. 28, when a user n intends to register an image, he or she inputs a desired image to be registered to the image registration system 80 (step 81), and inputs thereto result information which is associated with the image (step S82). Upon receiving such inputs, the image registration system 80 checks the similarity with respect to all images registered in the common data area of the TP data management DB 22 (step S83).

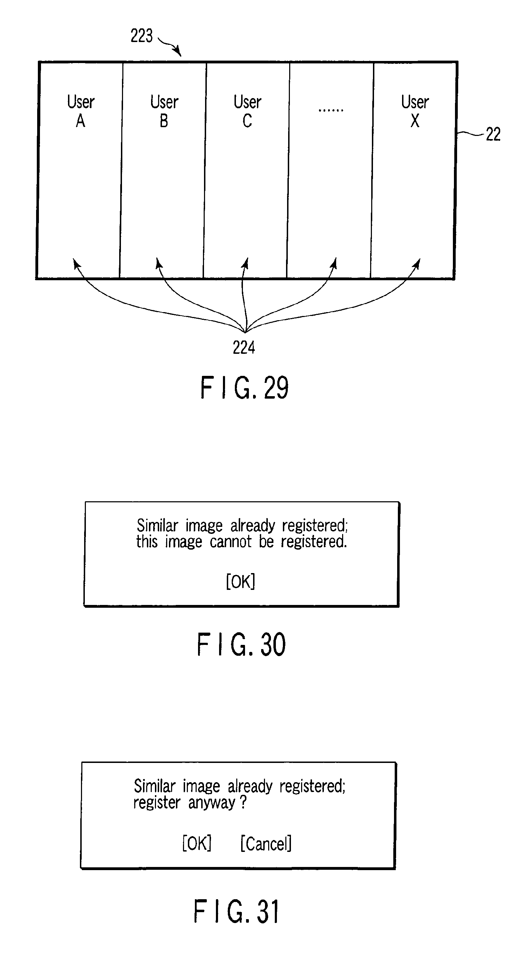

More specifically, as shown in FIG. 29, the TP data management DB 22 targets a common data area 223, which is the entire area of the TP data management DB 22, as the range through which images are searched for and the similarity is checked. The common data area 223 is a set of individual user areas 224. Images and result information are registered on a user-to-user basis in the individual user areas 224.

In the case where there is no similar image in the common data area 223 (step S84), the input image and result information are registered in the individual user area 224 of the user n (step S85), and this flow is ended.

On the other hand, there is any similar image in the common data area 223 (step S84), it is determined whether the similar image is registered in the individual user area 224 of the user n (step S86).

Assume that a user A has registered images a-1, a-2, a-3, ..., a-n, and a user B has registered images b-1, b-2, b-3, ··· . In this case, when a user C intends to register an image c-m, the image b-i similar to the image c-m has already been registered. In such a case, registration of the image c-m is not permitted and a registration rejection message as shown in FIG. 30 is displayed (step S87), and this flow is ended.

Next, assume that the user B intends to register an image b-m and that there exists an image b-i similar to the image b-m. In this case, the two images belong to the same user (step S86), so that a registration confirmation message as shown in FIG. 31 is displayed (step S88). Then, it is confirmed whether the user selects "OK" or "Cancel" (step S89). If "Cancel" is selected, this flow is ended. If "OK" is selected, the input image and result information are registered in the individual user area 224 of the user n (step S85), and this flow is ended.

As described above, in the case where an image to be registered is similar to another image of the same user that has already been registered, registration is permitted on the user's account. This operation is effective in the case where images of a 3D object acquired from a plurality of directions are registered, that is, in the case where one or more result information are obtained based on a plurality of images.

Thus, in the case where templates are created based on catalog pictures of similar articles, similarity between them may become close between them. However, as described above with reference to the above concrete examples, in the search system according to the present embodiment, templates are managed in a hierarchical manner to perform matching for respective templates by ANDing them, thereby reducing matching error.

When a large number (ten thousand or more) of matching reference data are referred to, matching is performed with matching servers connected in parallel and large number of the reference data divided into a plurality of blocks in order to reduce the process time. Such a method is currently under development. However, although such parallel process of the matching is effective in stochastically increasing the process speed, it has been proved by experiment made by the present inventors that recognition (success) rate cannot be increased. On the other hand, in the case of the tree structure adopted in the present search system according to the present embodiment, an increase of both process speed and recognition rate can be achieved in a balanced manner in terms of results.

Although the present invention has been described with reference to the preferred embodiment, the present invention is not limited to the above embodiment, and various modifications and applications may be possible within the scope of the present invention.

## Claims

1. A search system **characterized by** comprising:
image input means (11) for inputting an image;
search means (13, 21) for searching a database (22) for an image using templates, which are managed in a hierarchical manner, based on the image input by the image input means, the search means narrowing down the number of images to be searched for by performing template matching using a higher level hierarchical template (2221) and subsequent template matching using a lower level hierarchical template (2222); and
output means (12) for outputting images as search results narrowed down by the search means.

2. The search system according to claim 1, **characterized in that**
in the templates which are managed in a hierarchical manner, the cutout position of an image differs between the higher level hierarchical template (2221) and lower level hierarchical template (2222).

3. The search system according to claim 1, **characterized in that**
in the templates which are managed in a hierarchical manner, the resolution differs between the higher level hierarchical template (2221) and lower level hierarchical template (2222).

4. A method for searching a database for an image, **characterized by** comprising the steps of:
inputting an image (41);
performing, based on the input image, template matching using a higher level hierarchical template (2221) of templates managed in a hierarchical manner to search a database (22) for an image and further performing template matching using a lower level hierarchical template (2222) to narrow down the number of images to be searched for; and
outputting images as search results narrowed down by the search means.
